# NEW EUROPEAN PATENT SPECIFICATION

(11) **EP 1 721 697 B2**
(45) Date of publication and mention of the opposition decision: **11.03.2015**
(45) Mention of the grant of the patent: 13.08.2008
(21) Application number: 06252371.7
(22) Date of filing: 04.05.2006
(51) Int. Cl.: B23K 37/06, B23K 31/02, B23K 26/34, B23K 9/04, B23K 5/18, B23K 1/00, B23K 20/00, F01D 5/00

(54) **Superalloy repair methods and inserts**
Reparaturverfahren für Superlegierungen und Inserts
Procédé pour réparer superalliage et inserts

(30) Priority: 06.05.2005 US 123772
(43) Date of publication of application: 15.11.2006
(73) Proprietor: United Technologies Corporation, Hartford, CT 06101 (US)
(72) Inventor: Szela, Edward R., West Springfield, MA 01089 (US); Beals, James T., West Hartford, CT 06107 (US); Persky, Joshua E., Boulder, CO 80301 (US)
(74) Representative: Leckey, David Herbert

(56) References cited:
- EP-A1- 0 095 668
- EP-A1- 0 993 898
- EP-A1- 1 249 300
- EP-A2- 0 924 020
- EP-A2- 1 226 896
- WO-A-03/048528
- DE-A1- 19 963 010
- DE-B4-102004 002 551
- JP-A- S5 542 129
- JP-A- S56 167 802
- JP-A- S63 295 802
- JP-A- 2004 084 604
- US-A- 3 531 848
- US-A- 3 576 065
- US-A- 4 574 451
- US-A- 4 726 104
- US-A- 5 175 411
- US-A- 5 511 721
- US-A- 5 553 370
- US-A- 5 666 643
- US-A- 5 701 669
- US-B1- 6 283 356
- US-B1- 6 532 656
- US-B2- 6 742 698
- PATENT ABSTRACTS OF JAPAN vol. 013, no. 122 (M-807), 27 March 1989 (1989-03-27) & JP 63 295802 A (TOSHIBA CORP), 2 December 1988 (1988-12-02)
- PATENT ABSTRACTS OF JAPAN vol. 006, no. 056 (M-121), 13 April 1982 (1982-04-13) & JP 56 167802 A (TOSHIBA CORP), 23 December 1981 (1981-12-23)
- PATENT ABSTRACTS OF JAPAN vol. 004, no. 084 (M-016), 17 June 1980 (1980-06-17) & JP 55 042129 A (HITACHI LTD), 25 March 1980 (1980-03-25)
- PATENT ABSTRACTS OF JAPAN vol. 2003, no. 12, 5 December 2003 (2003-12-05) & JP 2004 084604 A (MITSUBISHI HEAVY IND LTD), 18 March 2004 (2004-03-18)

## Description

### BACKGROUND OF THE INVENTION

The invention relates to the manufacture, remanufacture, and restoration of nickel- or cobalt-based superalloy parts. More particularly, the invention relates to the restoration and/or remanufacture of defective, worn, and/or damaged gas turbine engine components including turbine and compressor blades and vanes, blade outer air seals, and transition duct segments. US 6,742,698 and US 4,726,104 disclose prior art methods for repairing turbine blades.

The components of gas turbine engines are subject to wear and damage. Even moderate wear and damage of certain components may interfere with optimal operation of the engine. Particular areas of concern involve parts which interact with the gas path such as seals and the airfoils of various blades and vanes. Wear and damage may interfere with their aerodynamic efficiency, produce dynamic force imbalances, and even structurally compromise the worn/damaged parts in more extreme cases.

Various techniques have been proposed for more extensive restoration of worn or damaged parts of gas turbine engines. U.S. Patent No. 4,822,248 discloses use of a plasma torch to deposit nickel- or cobalt-based superalloy material. U.S. Patent No. 5,732,467 identifies the use of high velocity oxy-fuel (HVOF) and low pressure plasma spray (LPPS) techniques for repairing cracks in such turbine elements. U.S. Patent No. 5,783,318 also identifies LPPS techniques in addition to laser welding and plasma transferred arc welding. U.S. Patent No. 6,049,978 identifies further use of HVOF techniques. Such techniques have offered a limited ability to build up replacement material to restore an original or near original cross-section. However, the structural properties of the replacement material may be substantially limited relative to those of the base material. U.S. Patent Nos. 4, 008,844 and 6,503,349 disclose methods and repair materials for transient liquid phase diffusion brazing repairs. Such a repair material is available under the trademark TURBOFIX.

Cracks tend to be rather narrow (e.g., 0. 25mm or less), but can be much wider depending upon engine exposure and oxidation. For thin cracks, it may be advantageous to form a diffusion bond crack repair (i.e., without machining out the crack to broaden the crack). This is also identified as "healing" the crack in a metallic substrate. An advantage of a healing is that the small transverse distances across the crack permit substantial diffusion, allowing the melting point depressants to diffuse out from the material within the crack and leaving highly near base metal composition. For typical nickel-base superalloys this results in an isothermally solidified structure whose mechanical properties are near that of the base metal.

For larger defects (e.g. large chips, wear areas, or contaminated cracks requiring routing out to provide a clean base metal surface) a "build-up" repair is required (e.g., wherein portions of the repair material are more than about 1 mm from the nearest base metal of the substrate). In many cases, a common alloy mixture may be used for both crack and build-up repairs although specifically designed "preforms" (i.e., prostheses) may be developed for a recurrent build-up repair. For build-up repairs, usually only a partial isothermal structure is achieved due to limitations in diffusion time relative to the required diffusion distances. As such, the build-up repair will have a coarse, more globular, type of microstructure while the crack repair will tend to look much like the base alloy with a defined grain structure.

For parts having cooling passageways, various techniques have been proposed for preserving those passageways when the passageways intersect the damage or wear site. U.S. Patent No. 6,742,698 discloses a refractory metal insert used with welding repairs along a trailing edge region of an airfoil. U.S. Patent No. 5,935,718 discloses inserts used in brazing and solder repairs.

### SUMMARY OF THE INVENTION

According to the present invention there is provided a method for forming or remanufacturing a component to have an internal space, as set forth in claim 1.

In various implementations, the portion may comprise a first portion inserted within a pre existing portion of the internal space and a second portion. The component may have previously lacked said internal space. The first powder component may include in its composition a quantity of a melting point depressant substantially in excess of that in the second powder. The first and second component powders may be present in a mass ratio of between 1:10 and 1:2. The first component powder may have at least 2.5% boron and the second component powder may have less than 0.5% boron. The first component powder may have at least 2% boron and the second component powder may have less than 1 % boron. The first and second component powders may be nickel based. The internal space may extend to a damage site from which the component has lost first material. The method may further comprise removing additional material at least partially from the damage site to create a base surface. The adding of the material may add the material atop the base surface at least partially in place of the first material and the additional material. The material may in major part replace said first material. The blocking element may have a first surface portion having a shape effective to re form an internal surface portion of the component bounding the internal space. The placing may cause the first surface portion to at least partially protrude from an intact portion of the component. The adding of the material may include adding the material atop the first surface portion. The component may be an internally-cooled gas turbine engine turbine section element. The material may be selected from the group consisting of Ni- or Co-based superalloys. The component may comprise a substrate material selected from the group consisting ofNi- or Co-based superalloys. The component may be a blade having an airfoil and the material may be added along a tip of the airfoil. The component may be a blade or vane having an airfoil and the material may be added along a trailing edge of the airfoil. The material may be added to a depth of at least 2.0 mm. The method may further comprise machining the material to restore an external contour of the airfoil. The positioning of the blocking element may comprise trimming a pre formed insert. The removing may comprise at least one of chemically removing and mechanically removing removing may comprise pulling. The method may be a portion of a reengineering and remanufacturing process wherein the component has been in service without said internal space and said internal space functions to increase resistance to thermal-mechanical fatigue.

### BRIEF DESCRIPTION OF THE DRAWINGS

FIG. 1 is a view of a turbine blade of a gas turbine engine.
FIG. 2 is a chordwise sectional view of the airfoil of the blade of FIG. 1.
FIG. 3 is a median sectional view of a tip portion of the airfoil of the blade of FIG. 1.
FIG. 4 is an enlarged view of a portion of the airfoil of FIG. 3 upon damage.
FIG. 5 is a view of the airfoil of FIG. 4 during remanufacture.
FIG. 6 is an enlarged view of a portion of the airfoil of FIG. 3 upon damage.
FIG. 7 is a view of the airfoil of FIG. 6 during remanufacture.
FIG. 8 is a view of the airfoil of FIG. 6 after remanufacture.
FIGS. 9 and 10 respectively are streamwise and spanwise sectional photomicrographs of a trailing edge repair after leaching out of an insert.
FIG. 11 is a streamwise sectional photomicrograph of a trailing edge repair before atop an insert.
FIG. 12 is an enlarged view of the photomicrograph of FIG 11.
FIG. 13 is a streamwise sectional photomicrograph of a trailing edge repair after removal of an insert.
FIG. 14 is an enlarged view of the photomicrograph of FIG 13.

Like reference numbers and designations in the various drawings indicate like elements.

### DETAILED DESCRIPTION

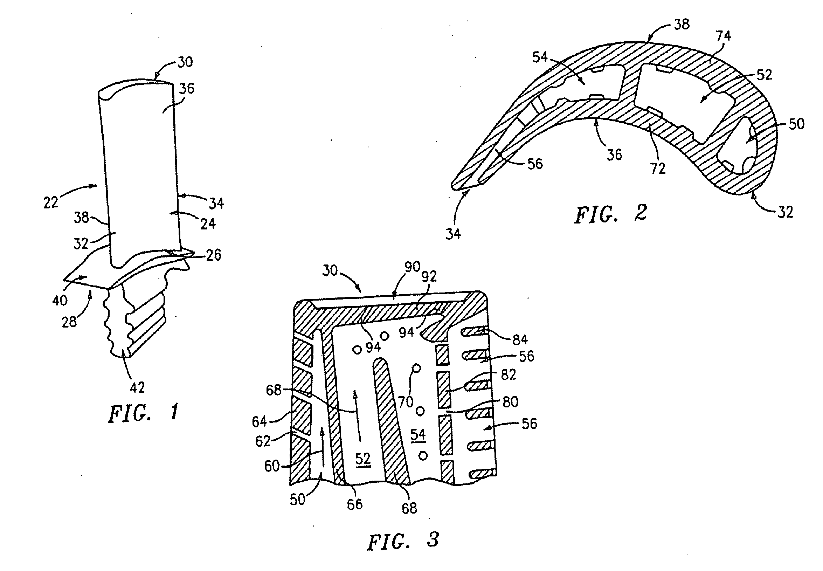

FIG. 1 shows a turbine element (e.g., a gas turbine engine turbine blade 22). The exemplary blade 22 includes an airfoil 24 extending from a root 26 at a platform 28 to a tip 30. The airfoil has leading and trailing edges 32 and 34 separating pressure and suction sides 36 and 38. The platform28 has an outboard portion 40 for forming an inboard boundary/wall of a core flowpath through the turbine engine. A mounting portion or blade root 42 depends centrally from the underside of the platform 28 for fixing the blade in a disk of the turbine engine. Optionally, all or some portion (e.g., the platform 28 and airfoil 24) may be coated. A cooling passageway network (not shown in FIG. 1) may extend through the blade from one or more inlets in the root to multiple outlets along the blade sides, edges, tip, and/or root. Exemplary blades may be made from nickel- or cobalt-based superalloys.

FIG. 2 shows portions of the cooling passageway network. The illustrated blade and network are illustrative. Those skilled in the art will recognize that other component envelope and passageway configurations are possible. The network includes a leading passageway or cavity 50, a second cavity 52 aft thereof, a third cavity 54 aft thereof, and a fourth cavity or trailing edge slot 56 yet further aft. FIG. 3 shows an implementation wherein the leading cavity 50 directs a cooling flow 60 from inboard to outboard and incrementally exiting through a spanwise series of leading edge cooling outlet passageways 62 in a leading edge wall portion 64. The second cavity 52 is separated from the leading cavity 50 by a wall portion 66. The exemplary second and third cavities are legs of a single passageway separated by a wall portion 68, with the second cavity 52 carrying a flow 68 in an outboard direction and the third cavity 54 returning the flow in an inboard direction. The second and third cavities may contain pedestal stubs 70 or other surface enhancements extending from pressure and suction side surfaces of respective pressure and suction side wall portions 72 and 74 (FIG. 2). Alternatively or additionally, pedestals (not shown) may extend between the sides. The inboard flow through the third cavity 54 incrementally exits aft through apertures 80 in a wall 82 dividing the third cavity from the slot 56. The slot 56 extends to the trailing edge and has a number of walls 84 extending between pressure and suction side surfaces of the respective pressure and suction side wall portions. In the exemplary embodiment, the tip 30 has a tip cavity or pocket 90 separated from the internal cavities by a wall 92 and having outlet passageways 94 therein for venting air from the flow 68.

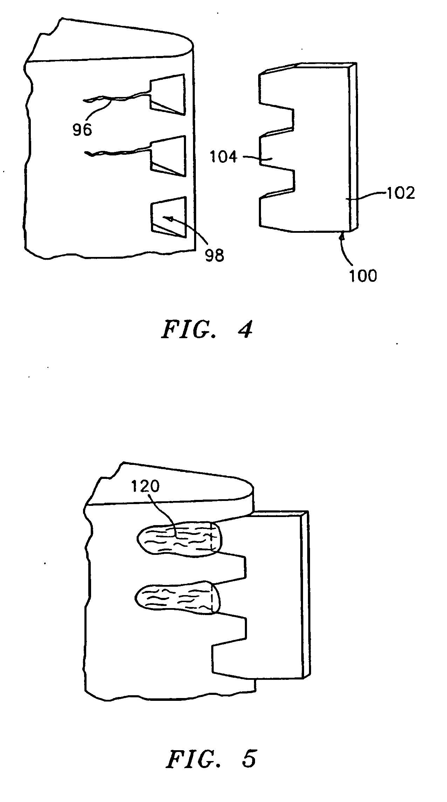

FIG. 4 shows localized damage such as cracks 96 resulting from thermal-mechanical fatigue. The exemplary cracks 96 are located in the pressure side wall 72 and extend forward/upstream from outlets 98 of the slot 56 between associated pairs of the walls 84. In addition or alternative to the TMF cracking, the airfoil may be subject to foreign object damage (FOD) and more general damage such as wear, erosion, oxidation, or creep or may have a manufacturing defect. Even when the damage itself does not penetrate the interior of the airfoil, the penetration may be close enough to the cavity that repair attempts may penetrate the cavity. For example, it may be desired to clean the damaged surfaces prior to repair. If the cleaning involves machining, that machining may penetrate the cavity.

According to the invention, an additional material is applied in association with a cavity, passageway, or other part internal space by diffusion brazing. A preferred diffusion braze involves use of a transient liquid phase (TLP) forming process such as disclosed in US Patent 4,008,844. In this process, powders of multiple alloys are provided either pre-mixed or mixed by the application apparatus. The component powders may be selected in view of the workpiece properties. The exemplary powder material TLP-forming powder and a main powder. The exemplary main powder may have a composition similar to the desired deposit. The TLP powder may have an otherwise generally similar composition but including at least one melting point depressant such as boron.

The workpiece may consist of or comprise a nickel- or cobalt-based superalloy substrate (e.g., such a substrate may have a protective coating). The apparatus may be used to form a deposit for replacing material lost from the substrate (e.g., due to damage plus cleaning and preparation) or to augment (e.g., fill a manufacturing defect, coat with a dissimilar material, or otherwise).

Prior to material application, the site may be cleaned of contamination. Protective coatings may be locally or globally removed or left in place. Coating removal may be by grit blast (e.g., for ceramic barrier coatings) or by exposure to liquid acids (e.g., a hydrochloric/nitric acid solution for removal of metallic coatings). Additional steps such as vacuum cleaning, or fluoride ion cleaning may be employed to remove tenacious oxides formed during engine operation. When oxidation products extend into deep cracks, fluoride cleaning as is most appropriate. Corrosive products may also be removed by chemical means or by grit blast.

To form the missing interior surface of the airfoil along the cracks 96 and to prevent infiltration of the additional material into the slot 56, a backing element 100 is used. The exemplary backing element is formed of an uncoated single refractory metal (e.g., selected from the group consisting of niobium, tantalum, molybdenum, and tungsten). For the exemplary trailing edge slot use, the element 100 is formed as a comb having a spine 102 and a plurality of tines 104. The tines are dimensioned to fit within an associated outlet 98 and have pressure and suction side surfaces positioned to fall along the interior surfaces of the and pressure and suction side walls 70 and 72. Lateral surfaces of the tines are configured to fall along lateral surfaces of the adjacent ribs 84.

After comb insertion, paste patches 120 of the repair material are applied over the cracks 96 and may overlap adjacent portions of the comb 100. An exemplary viscous paste is formed by combining the alloy powders and a suitable volatile binder which is flux free to avoid contamination. The binder is capable of being burned off without leaving an undesirable residue when the paste is heated. Advantageously, the binder burns off well before melting of the TLP material begins (e.g., burns off at or below 538°C (1000°F)). For larger cracks or for channels routed out to remove cracks, the patches may fill the open area atop the comb tines within the crack or routed channel. An exemplary binder is NICROBRAZ S binder from Wall Colmonoy Corporation, Madison Heights, Michigan.

To initiate the bonding, the pasted airfoil is heated. In an exemplary processing cycle, the component and paste are heated in a suitable protective atmosphere (e.g., inert gas, vacuum, or other gas not adversely interacting with the process). An exemplary temperature is about 1204°C (2200°F) (e.g., 1177-1246°C (2150-2275°F)). An exemplary duration of this heating is 5-24 hours (e.g., about ten hours). Following this heating the component may be rapidly cooled. In a second exemplary processing cycle, the component and paste are heated in a suitable protective atmosphere to a greater temperature for a much shorter duration. An exemplary temperature is about 1260°C (2300°F) (e.g., 1232-1288°C (2250-2350°F)). An exemplary duration of this heating less than about thirty minutes, preferably fifteen minutes or less and is followed by rapid cooling.

The comb may then be removed by leaching. The exterior contour of the airfoil may be restored by machining the exterior of the patch material formed from the patches 120. The component may then be subjected to an aging heat treatment. A coating may be applied (either overall or locally atop the machined patch areas if coating is elsewhere intact).

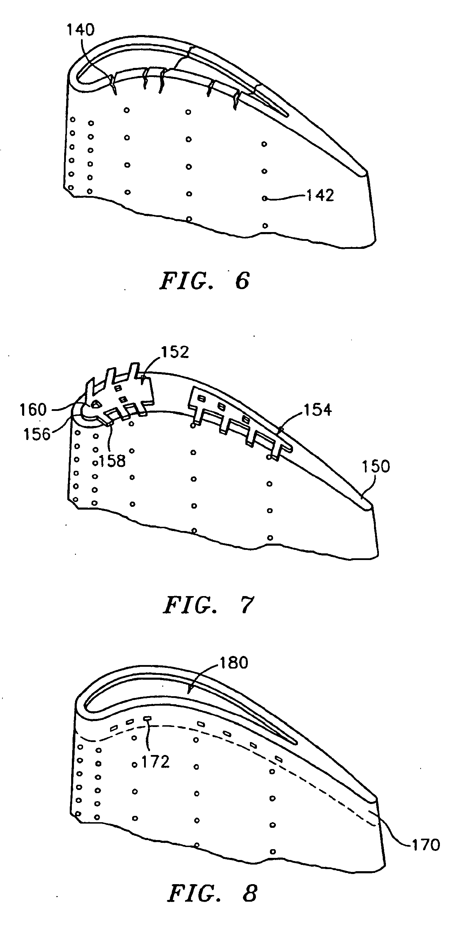

FIG. 6 shows damage to the tip area of the blade of FIG. 1. In the exemplary damage, TMF cracks 140 have formed along the pressure side wall 72 at the tip 30. Analysis of the cracks may show that improved cooling is appropriate. For example, existing cooling holes/passageways 142 may not provide the most advantageous cooling. It may thus be desirable to remanufacture the blade with improved cooling not previously present by remanufacturing the blade in accordance by the present methods. For example, the shape, size, distribution or the like of the holes/passageways may be altered. Additional holes or passageways may be provided.

A tip portion of the blade may be removed by machining to leave a cut surface 150 (FIG. 7). One or more backing elements 152 and 154 may be applied over the cut surface 150. The exemplary elements 152 and 154 each have a central main body 156 from which a plurality fingers 158 extend. The elements 152 and 154 also include apertures 160. Material 170 (FIG. 8) may be built up over the backing elements 152 and 154 to form a replacement tip region. An exemplary build-up is performed by laser cladding. After leaching out the backing elements 152 and 154 and any further machining (e.g., to provide the final airfoil contour), the replacement tip region includes cooling passageways/holes left by the fingers 158. In some implementations, the bodies 156 may leave plenums to feed the cooling passageways. In such plenums, the holes 160 may leave posts connecting/retaining an outboard portion of the replacement tip to the base metal at the cut surface 150. The plenums may be fed by holes extending into one or more of the pre-existing internal cavities 50, 52, and 54 (e.g., pre-drilled through the surface 150). A tip cavity180 (e.g., like 90) may be machined in the replacement tip and feed holes drilled into the plenum (if any) or the pre-existing internal cavities.

### EXAMPLE 1

A trailing edge repair not in accordance with the invention was carried out on a plurality of vane airfoils formed of PWA 1484 superalloy (nominal composition in weight percent: 5 Cr, 5.6 Al, 9 Ta, 6 W, 3 Re, 2 Mo, 10 Co, 0.1 Hf, balance Ni and more broadly identified in US6,503,349). A cut-off wheel was used to machine a streamwise gap through the trailing edge to simulate the gap where similar machining removes a cracked area. Alumina-coated molybdenum combs were used. A powder mix consisting of 60% PWA 1484 and 40% PWA 36117-1 TLP or low melt alloy (e.g., as disclosed in at the last paragraph of the third column of US6,503,349). All percentages are weight percentages unless identified to the contrary. The vane airfoil and repair alloy were heated in a protective atmosphere to a temperature of about 1218°C (2225°F), for a time period of about ten hours. Following heating, the component was rapidly cooled. The repair alloy was observed to flow and wet the surface of the component indicating that the repair alloy filled the repair gaps.

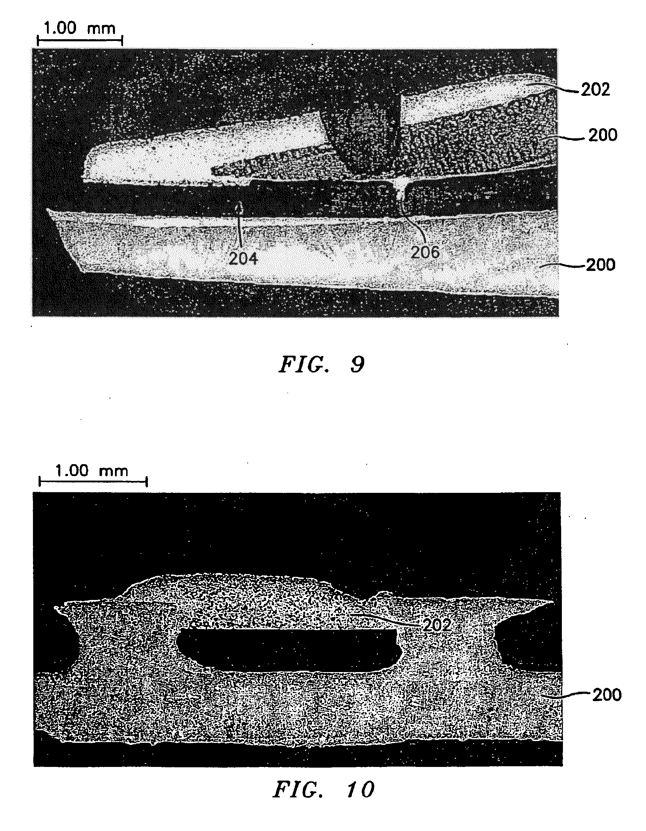

The vane repair areas were metallographically sectioned in transverse (spanwise) and longitudinal (streamwise) directions, mounted, polished, and swab etched with AG 21 etchant (a mixed acid solution containing lactic, nitric, and hydrofluoric acids) to reveal the microstructures of the base metal substrate 200 and the applied material 202. The sections were examined with optical microscopy. FIGS. 9 and 10 show streamwise and spanwise sections after leaching out of the comb and etching (an erroneous spanwise cut in the FIG. 9 streamwise section suction side should be ignored). The observed microstructure of the material 202 is consistent with typical nickel TURBOFIX TLP build-up repairs. Athermal, eutectic phases are evidenced throughout the material. A partially isothermal solidification microstructure is present throughout the material 202.

The geometry of the exit slot 204 was well maintained by the insert/comb. The fit-up of the insert appears critical for the reproduction of internal features. The size of the cooling passage or internal feature is dependent upon the initial insert fit. In this example, a slightly undersized insert resulted in a reduction in the slot width in the repaired slot. It was also observed that the molten TURBOFIX alloy flowed and flashed over the inner edge of the molybdenum comb to create a flash area 206. In a production environment, if improved insert fit does not completely prevent flashing, the addition of a conventional internal stop-off may be used to prevent this flashing and avoid a need to machine out/off the flash. With the coated insert, adhesion between the insert and the material is limited. It was observed that, if the insert shape avoided interlocking (e.g., by appropriate tapering), the insert could be pulled out after the repair so as to avoid the need to chemically leach out the insert. Physical (mechanical) removal allows one to avoid the chemical leaching operation. Chemical leaching typically involves immersion of the repaired component in a mixed acid solution (e.g., aqueous nitric/sulfuric acid solution). With physical removal, the leaching step may be avoided. This results in time savings, in reduced equipment requirements, and in waste reduction (waste acids). The ceramic coating ,may inhibit wetting of the insert (e.g., relative to wetting of nickel-plated or uncoated inserts). The relatively non-wetting ceramic coating may thus be appropriate to limit wicking of a molten alloy (e.g., the braze material) into the internal cavity. Where wetting is desired, an uncoated or plated insert could be preferred.

### EXAMPLE 2

A similar trailing edge repair was carried out in accordance with the invention using uncoated molybdenum combs. Heating parameters were the same as Example 1. The repair alloy was observed to flow and wet the surface of the component indicating that the repair alloy filled the repair gaps. To the eye, no difference was noted in the interaction between the molten repair alloy and the uncoated comb relative to the coated comb. Microstructural evaluation reveal some significant microstructural differences described below.

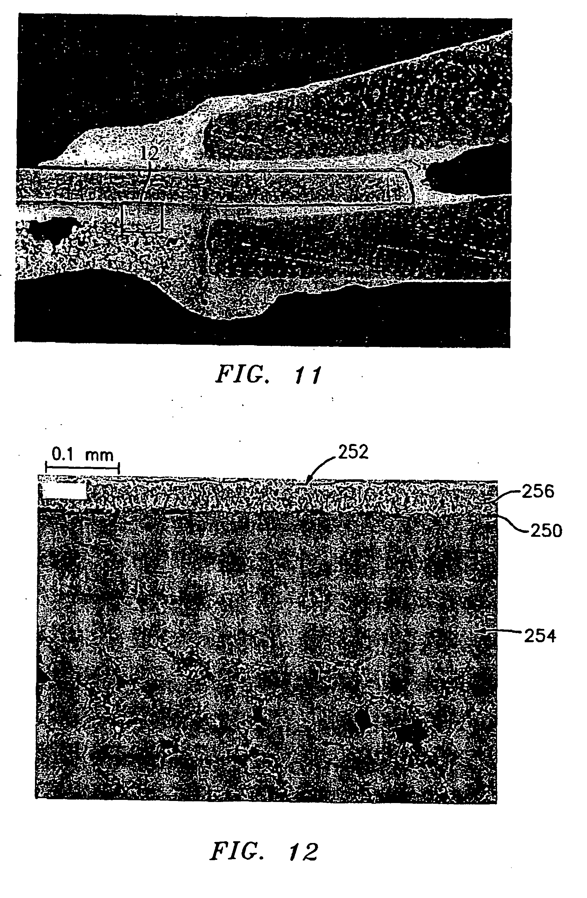

FIG. 11 shows a cross-section of the repair before comb removal. FIG. 12 shows the interface 250 between the comb 252 and repair material 254. The comb 252 reacted with the material 254 to form a diffusion zone 256 along the interface within the comb. Quantitative electron microprobe analysis determined that the diffusion zone 256 is composed mainly of 17% nickel and 60% molybdenum. Boron was also present in the diffusion zone 256. A quantitative assessment of the boron level was not practical due to interference from the molybdenum signature relative to the boron signature. Because the diffusion zone 256 was primarily composed of molybdenum, the chemical leaching process was successful in completely removing this layer along with the pure molybdenum comb 252. Microprobe analysis also found that the material 254 had an average composition close to the original substrate chemistry.

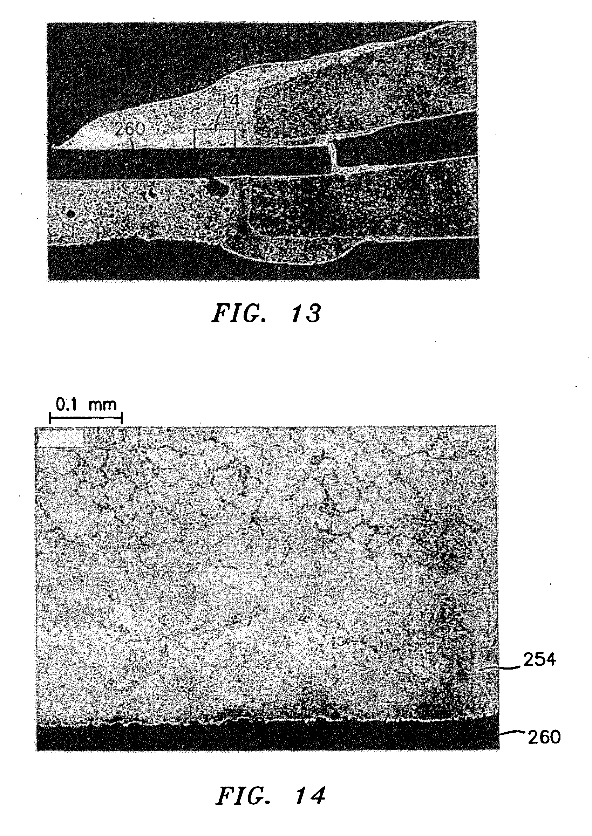

FIG. 13 and 14 show a cross-section of the repair after comb removal by chemical leaching to leave a slot 260. An observation that may be made when comparing FIGS. 9 and 10 on the one hand and FIGS. 13 and 14, on the other hand, is that the zone of repair material 254 adjacent to the uncoated comb 252 appears to exhibit a microstructure that is more similar to a TURBOFIX TLP crack repair (full isothermal solidification) while the material 202 adjacent to the alumina-coated comb appears more like a TURBOFIX TLP build-up repair. In the fully isothermal solidification structure, a defined grain structure similar to the base metal is observed. However, in regions of partial isothermal solidification, sub-regions rich in boron are observed between globular phases composed mainly of the base alloy constituents. This athermal microstructure may tend to result from limitations in diffusion due to time, temperature, and the availability of a diffusion path for boron. Structurally, a fully isothermal structure will achieve near base metal strength levels while athermal structures will be brittle and low in strength compared to the base metal. The material 202 adjacent to the alumina-coated comb appears to inhibit/block boron diffusion into the molybdenum while the uncoated comb acts as a sink for excess boron. The result of the boron sink is an improved build-up microstructure adjacent to the uncoated comb.

One or more embodiments of the present invention have been described. Nevertheless, it will be understood that various modifications may be made without departing from the scope of the invention. For example, although particularly useful with turbine blades and vanes, the methods may be applied to other blades and other turbine engine parts and non-turbine parts. Details of the particular turbine engine part or other piece and the particular wear or damage suffered or susceptible to may influence details of any given restoration. Accordingly, other embodiments are within the scope of the following claims.

## Claims

1. A method for forming or remanufacturing a component (22) to have an internal space comprising;
positioning a refractory metal blocking element (100; 152, 154) which is essentially an uncoated single refractory metal with at least a portion (104; 156) to be within the internal space;
adding a material by diffusion brazing using a powdered material comprising a mixture of first and second component powders, the second powder being a majority, by weight, of the powdered material and the first powder acting as a melting point depressant for the second powder, the blocking element (100; 152, 154) at least partially blocking entry of the material to the internal space; and
removing the blocking element (100; 152, 154).

2. The method of claim 1 wherein:
the portion comprises a first portion inserted within a pre-existing portion of the internal space and a second portion.

3. The method of any preceding claim wherein:
the component (22) had previously lacked said internal space.

4. The method of any preceding claim wherein:
the first powder component includes in its composition a quantity of a melting point depressant substantially in excess of that in the second powder.

5. The method of any preceding claim wherein:
the first and second component powders are present in a mass ratio of between 1:10 and 1:2.

6. The method of any preceding claim wherein:
the first component powder has at least 2.5% boron; and
the second component powder has less than 0.5% boron.

7. The method of any of claims 1 to 5 wherein:
the first component powder has at least 2% boron; and
the second component powder has less than 1% boron.

8. The method of any preceding claim wherein:
the first and second component powders are nickel or cobalt based.

9. The method of any preceding claim wherein:
the internal space extends to a damage site (96, 140) from which the component (22) has lost first material.

10. The method of claim 9 wherein:
the method further comprises removing additional material at least partially from the damage site (96, 140) to create a base surface; and
the adding of the material adds the material atop the base surface at least partially in place of the first material and the additional material.

11. The method of claim 9 or 10 wherein:
said material in major part replaces said first material.

12. The method of any preceding claim wherein:
the blocking element (152, 154) has a first surface portion (158) having a shape effective to re-form an internal surface portion of the component (22) bounding the internal space;
the placing causes the first surface portion (158) to at least partially protrude from an intact portion of the component (22); and
the adding of the material includes adding the material atop the first surface portion (158).

13. The method of any preceding claim wherein:
the component (22) is an internally-cooled gas turbine engine turbine section element.

14. The method of any preceding claim wherein said material is selected from the group consisting of Ni- or Co-based superalloys.

15. The method of any preceding claim wherein said component (22) comprises a substrate material selected from the group consisting of Ni- or Co-based superalloys.

16. The method of any preceding claim wherein the component (22) is a blade having an airfoil (24) and the material is added along a tip (30) of the airfoil.

17. The method of any of claims 1 to 15 wherein the component (22) is a blade having an airfoil (24) and the material is added along a trailing edge (34) of the airfoil (24).

18. The method of any preceding claim wherein the material is added to a depth of at least 2.0 mm.

19. The method of any preceding claim further comprising:
machining the material to restore an external contour of the component (22).

20. The method of any preceding claim wherein the positioning of the blocking element (100; 152, 154) comprises trimming a pre-formed insert.

21. The method of any preceding claim wherein the removing comprises at least one of chemically removing and mechanically removing.

22. The method of any preceding claim wherein the removing comprises pulling.

23. The method of any preceding claim being a portion of a reengineering and remanufacturing process wherein the component (22) has been in service without said internal space and said internal space functions to increase resistance to at least one of thermal-mechanical fatigue, creep, and oxidation.

## Patentansprüche

1. Verfahren zum Bilden oder Umarbeiten einer Komponente (22) derart, dass es einen Innenraum aufweist, umfassend:
Positionieren eines feuerfesten Metallblockierungselements (100; 152, 154), das im Wesentlichen ein unbeschichtetes einzelnes feuerfestes Metall mit wenigstens einem Abschnitt (104; 156) ist, der in dem Innenraum liegen soll;
Hinzufügen eines Materials durch Diffusionshartlöten mithilfe eines pulverförmigen Materials, das ein Gemisch von einem ersten und zweiten Komponentenpulver umfasst, wobei das zweite Pulver nach Gewicht ein Hauptanteil des pulverförmigen Materials ist und das erste Pulver als ein Schmelzpunktsenker für das zweite Pulver wirkt, wobei das Blockierungselement (100; 152, 154) wenigstens teilweise das Eindringen des Materials in den Innenraum blockiert; und
Entfernen des Blockierungselements (100; 152, 154).

2. Verfahren nach Anspruch 1, wobei:
der Abschnitt einen ersten Abschnitt, der in einen existierenden Abschnitt des Innenraums eingeführt ist, und einen zweiten Abschnitt umfasst.

3. Verfahren nach einem der vorangehenden Ansprüche, wobei:
der Komponente (22) zuvor ein Innenraum gefehlt hat.

4. Verfahren nach einem der vorangehenden Ansprüche, wobei:
die erste Pulverkomponente in ihrer Zusammensetzung eine Menge eines Schmelzpunktsenker enthält, die diejenige im zweiten Pulver wesentlich übersteigt.

5. Verfahren nach einem der vorangehenden Ansprüche, wobei:
das erste und das zweite Komponentenpulver in einem Masseverhältnis zwischen 1:10 und 1:2 vorliegen.

6. Verfahren nach einem der vorangehenden Ansprüche, wobei:
das erste Komponentenpulver wenigstens 2,5 % Bor aufweist; und
das zweite Komponentenpulver weniger als 0,5 % Bor aufweist.

7. Verfahren nach einem der Ansprüche 1 bis 5, wobei:
das erste Komponentenpulver wenigstens 2 % Bor aufweist; und
das zweite Komponentenpulver weniger als 1 % Bor aufweist.

8. Verfahren nach einem der vorangehenden Ansprüche, wobei:
das erste und das zweite Komponentenpulver nickel- oder kobaltbasiert sind.

9. Verfahren nach einem der vorangehenden Ansprüche, wobei:
der Innenraum sich zu einer Beschädigungsstelle (96, 140) erstreckt, an der die Komponente (22) erstes Material verloren hat.

10. Verfahren nach Anspruch 9, wobei:
das Verfahren ferner umfasst, weiteres Material wenigstens teilweise von der Beschädigungsstelle (96, 140) zu entfernen, um eine Grundfläche zu schaffen; und
das Hinzufügen des Material das Material wenigstens teilweise anstelle des ersten Materials und des weiteren Materials auf der Grundfläche hinzufügt.

11. Verfahren nach Anspruch 9 oder 10, wobei:
das Material das erste Material zum größten Teil ersetzt.

12. Verfahren nach einem der vorangehenden Ansprüche, wobei:
das Blockierungselement (152, 154) einen ersten Oberflächenabschnitt (158) mit einer Form aufweist, die wirksam ist, um einen Innenflächenabschnitt der Komponente (22) in Angrenzung an den Innenraum neu zu bilden;
das Anordnen bewirkt, dass der erste Oberflächenabschnitt (158) wenigstens teilweise von einem intakten Abschnitt der Komponente (22) vorspringt; und
das Hinzufügen des Materials Hinzufügen des Materials auf dem ersten Oberflächenabschnitt (158) einschließt.

13. Verfahren nach einem der vorangehenden Ansprüche, wobei:
die Komponente (22) ein intern gekühltes Gasturbinenmotorabschnittelement ist.

14. Verfahren nach einem der vorangehenden Ansprüche, wobei das Material aus der Gruppe bestehend aus Ni- oder Co-basierten Superlegierungen ausgewählt wird.

15. Verfahren nach einem der vorangehenden Ansprüche, wobei die Komponente (22) ein Substratmaterial umfasst, das aus der Gruppe bestehend aus Ni- oder Co-basierten Superlegierungen ausgewählt wird.

16. Verfahren nach einem der vorangehenden Ansprüche, wobei die Komponente (22) eine Schaufel mit einem Profil (24) ist und das Material entlang einer Spitze (30) des Profils hinzugefügt wird.

17. Verfahren nach einem der Ansprüche 1 bis 15, wobei die Komponente (22) eine Schaufel mit einem Profil (24) ist und das Material entlang einer Hinterkante (34) des Profils (24) hinzugefügt wird.

18. Verfahren nach einem der vorangehenden Ansprüche, wobei das Material mit einer Tiefe von wenigstens 2,0 mm hinzugefügt wird.

19. Verfahren nach einem der vorangehenden Ansprüche, ferner umfassend:
Bearbeiten des Materials, um eine Außenkontur der Komponente (22) wiederherzustellen.

20. Verfahren nach einem der vorangehenden Ansprüche, wobei das Positionieren des Blockierungselements (100; 152, 154) Zuschneiden eines vorgeformten Einsatzes umfasst.

21. Verfahren nach einem der vorangehenden Ansprüche, wobei das Entfernen wenigstens eins von chemischem Entfernen und mechanischem Entfernen umfasst.

22. Verfahren nach einem der vorangehenden Ansprüche, wobei das Entfernen Ziehen umfasst.

23. Verfahren nach einem der vorangehenden Ansprüche, das ein Teil eines Überarbeitungs- und Umarbeitungsprozesses ist, wobei die Komponente (22) ohne den Innenraum in Betrieb war und der Innenraum bewirkt, dass die Beständigkeit gegenüber wenigstens einem von thermisch-mechanischer Ermüdung, Kriechen und Oxidation erhöht wird.

## Revendications

1. Procédé de formation ou de restauration d'un composant (22) pour obtenir un espace interne, comprenant :
le positionnement d'un élément de blocage de métal réfractaire (100 ; 152, 154) qui est principalement un métal réfractaire unique non revêtu doté d'au moins une partie (104 ; 156) devant se trouver dans l'espace interne ;
l'ajout de matière par diffusion de brasage à l'aide de matière pulvérulente comprenant un mélange de première et de deuxième poudres de composant, la deuxième poudre constituant une majorité, en poids, de la matière pulvérulente et la première poudre agissant comme un déprimant de point de fusion pour la deuxième poudre, l'élément de blocage (100 ; 152, 154) bloquant au moins en partie l'entrée de la matière vers l'espace interne ; et
l'élimination de l'élément de blocage (100 ; 152, 154).

2. Procédé selon la revendication 1, dans lequel :
la partie comprend une première partie insérée dans une partie préexistante de l'espace interne et une deuxième partie.

3. Procédé selon l'une quelconque des revendications précédentes, dans lequel :
le composant (22) était préalablement absent dudit espace interne.

4. Procédé selon l'une quelconque des revendications précédentes, dans lequel :
le composant de première poudre comprend dans sa composition une certaine quantité d'un déprimant de point de fusion sensiblement en excès par rapport à celui présent dans la deuxième poudre.

5. Procédé selon l'une quelconque des revendications précédentes, dans lequel :
les poudres de premier et de deuxième composant sont présentes selon un rapport de masse compris entre 1:10 et 1:2.

6. Procédé selon l'une quelconque des revendications précédentes, dans lequel :
la poudre de premier composant contient au moins 2,5 % de bore ; et
la poudre de deuxième composant contient moins de 0,5 % de bore.

7. Procédé selon l'une quelconque des revendications 1 à 5, dans lequel :
la poudre de premier composant contient au moins 2 % de bore ; et
la poudre de deuxième composant contient moins de 1 % de bore.

8. Procédé selon l'une quelconque des revendications précédentes, dans lequel :
les poudres de premier et de deuxième composant sont à base de nickel ou de cobalt.

9. Procédé selon l'une quelconque des revendications précédentes, dans lequel :
l'espace interne s'étend jusqu'à un site d'endommagement (96, 140) à partir duquel le composant (22) contient un premier matériau perdu.

10. Procédé selon la revendication 9, dans lequel :
le procédé comprend en outre l'élimination de matière supplémentaire au moins en partie du site d'endommagement (96, 140) pour créer une surface de base ; et
l'ajout de matière ajoute la matière au-dessus de la surface de base au moins en partie à la place de la première matière et de la matière supplémentaire.

11. Procédé selon la revendication 9 ou 10, dans lequel :
ladite matière remplace en majeure partie ladite première matière.

12. Procédé selon l'une quelconque des revendications précédentes, dans lequel :
l'élément de blocage (152, 154) contient une première partie de surface (158) dont la forme est efficace pour reformer une partie de surface interne du composant (22) reliant l'espace interne ;
le placement amène la première partie de surface (158) à au moins faire en partie saillie à partir d'une partie intacte du composant (22) ; et
l'ajout de matière comprend l'ajout de matière au-dessus de la première partie de surface (158).

13. Procédé selon l'une quelconque des revendications précédentes, dans lequel :
le composant (22) est un élément de partie de turbine de moteur à gaz refroidi en interne.

14. Procédé selon l'une quelconque des revendications précédentes, dans lequel ladite matière est choisie dans l'ensemble constitué de superalliages à base de nickel (Ni) ou de cobalt (Co).

15. Procédé selon l'une quelconque des revendications précédentes, dans lequel ledit composant (22) comprend un matériau de substrat choisi dans l'ensemble constitué de superalliages à base de nickel (Ni) ou de cobalt (Co).

16. Procédé selon l'une quelconque des revendications précédentes, dans lequel le composant (22) est une aube comportant un profilé (24) et où la matière est ajoutée le long d'un embout (30) du profilé.

17. Procédé selon l'une quelconque des revendications 1 à 15, dans lequel le composant (22) est une aube (24) et où le matériau est ajouté le long d'un bord de traîne (34) du profilé (24).

18. Procédé selon l'une quelconque des revendications précédentes, dans lequel la matière est ajoutée à une profondeur d'au moins 2,0 mm.

19. Procédé selon l'une quelconque des revendications précédentes, comprenant :
l'usinage du matériau afin de restaurer un contour externe du composant (22).

20. Procédé selon l'une quelconque des revendications précédentes, dans lequel le positionnement de l'élément de blocage (100 ; 152, 154) comprend l'ébarbage d'une entretoise préalablement formée.

21. Procédé selon l'une quelconque des revendications précédentes, dans lequel l'élimination comprend au moins soit l'élimination chimique soit l'élimination mécanique.

22. Procédé selon l'une quelconque des revendications précédentes, dans lequel l'élimination comprend l'extraction.

23. Procédé selon l'une quelconque des revendications précédentes, qui fait partie d'un procédé de reconfiguration et de restauration où le composant (22) a été en service sans ledit espace interne et où ledit espace interne fonctionne pour accroître la résistance à au moins soit la fatigue thermomécanique, soit le fluage, soit l'oxydation.
